# EUROPEAN PATENT APPLICATION

(11) **EP 1 588 805 A2**
(43) Date of publication of application: **26.10.2005**
(21) Application number: 05008548.9
(22) Date of filing: 19.04.2005
(51) Int. Cl.: B25H 3/02, B25H 3/00

(54) **Case with removable accessory holder**

(30) Priority: 21.04.2004 US 829627
(71) Applicant: Techtronic Industries Co., Ltd., New Territories, Hong Kong (CN)
(72) Inventor: Ohi, Taku, Greer SC 29650 (US)
(74) Representative: HOFFMANN EITLE

(57) **Abstract**

A container (10), such as a toolbox, is disclosed with a reversible accessory holder (20). When the accessory holder is inserted into the container in a first position, the theft of the contents of the holder is prevented because the contents cannot be accessed from the exterior of the container nor can the holder be removed. When the accessory holder is inserted into the container in a second position, its contents can be conveniently accessed from the outside of the container by opening the accessory holder door without opening the entire container.

A method of deterring the theft of items displayed in a container, while allowing access to those items from the outside of the container after purchase is also disclosed. The method includes inserting a reversible, transparent accessory holder (20) into an aperture within a container (10), with the door of the holder facing the interior of the container, and then reversing the orientation of the holder to allow external access after purchase.

## Description

### BACKGROUND

### 1. Technical Field

The present invention generally relates to containers for displaying, storing, and transporting items. More specifically, the illustrative embodiments of the present invention relate to toolboxes which may be used to display, store, and transport tools and accessories.

### 2. Background Information

Containers for storing and transporting items may take many forms. For example, tool cases, toolboxes, tackle boxes, sewing boxes, lunch boxes, or briefcases may be used to transport work-related or hobby-related items and accessories. A lid is typically mounted on such containers to cover the opening into the storage area. The lid also usually includes a fastening device so that the container may be securely closed during storage or transportation. Other configurations such as top and bottom clamshell-shaped halves that are hingedly connected also can be used.

Some types of containers are designed to facilitate display of their contents at retail locations. For example, a toolbox may contain a transparent window that allows consumers to view the tool contained within the toolbox without opening the toolbox. The window, however, is typically fixed and does not permit a purchaser of the toolbox to access the items contained within it when the toolbox is in a closed position. In fact, the toolbox may be designed to prohibit removal of the tool when the container is closed. *See e.g.,* U.S. Patent Application Publication No. 2003/0089630.

On the other hand, some types of containers include secondary compartments that are designed to facilitate removal of their contents from the outside of the container. *See e.g.,* U.S. Patent Application Publication No. 2003/0106821 and U.S. Patent No. 5,887,715. These containers, however, provide no protection from theft when the containers and their contents are on display at retail locations. It is even conceivable that an unauthorized individual could remove the entire secondary compartment from the main container and transport it out of the retail facility.

It is important to protect items on display in retail locations from theft, but, at the same time, it is convenient to maintain the accessibility of items within the container from the outside of the container for the convenience of the ultimate user of the product. The user is typically required to either keep the entire container open during use and risk inadvertent spillage, or undergo the hassle of unfastening and opening the entire container each time an item is sought. Therefore, there is a need for a container that prohibits theft while on display at retail locations, while allowing the user to conveniently access the items within the container externally after purchase. Similarly, there is a need for a method of deterring the theft of items displayed in a container, while allowing subsequent access to those items from the outside of the container.

### BRIEF SUMMARY

In general, the present invention provides a container with a reversible accessory holder that protects against the theft of items within the holder, while allowing the purchaser easy access to those items when needed. In one embodiment of the invention, the holder is transparent so that the items inside may be viewed externally - for example, while on display at a retail facility. The holder may be equipped with an access door, as well as slots or rails that mate with rails or slots located within the container, allowing the holder to be slidably inserted within the container or on the exterior of the container. This arrangement allows the holder door to be opened from the inside of the container when the holder is inserted in a first position and from the outside of the container when it is inserted in a second position.

Another aspect of the present invention is directed to a method of deterring the theft of items displayed in a container, while allowing access to those items from the outside of the container after purchase. The method includes inserting a reversible, transparent accessory holder into a bracket surrounding an aperture in one of the sides of the container, with the door of the holder directed toward the interior of the container. With the holder inserted in this position, the items within the holder are protected from theft while the container is on display at a retail facility. After purchase of the container, the accessory holder may be removed from the container and reinserted with the holder door facing the exterior of the container. With the holder inserted in this position, the user may then conveniently access the items in the holder by opening the door of the holder, rather than opening the entire container every time an item is needed.

Additional features and advantages of the present invention will be apparent to one of ordinary skill in the art from the drawings and detailed description of the preferred embodiments below.

### BRIEF DESCRIPTION OF THE DRAWINGS

Figure I is a perspective view of one embodiment of a case having a reversible accessory holder, with the holder door in a closed position;

Figure 2 is a view similar to Figure 1, except showing the holder door in an open position;

Figure 3 is a sectional view of one embodiment of a reversible accessory holder contained within a case, taken along line 3-3 of Figure 7;

Figure 4 is one embodiment of the reversible accessory holder used in the present invention;

Figure 5 is a sectional view of the embodiment of a reversible accessory holder (having the rail and slot arrangement of the holder in Figure 4) that is removed from a container, and showing through dashed lines the relative position of the holder to the container, along the line 5-5 of Figure 7;

Figure 6 is a sectional view of the embodiment of a reversible accessory holder (having the rail and slot arrangement of the holder in Figure 3) that is removed from a container, and showing through dashed lines the relative position of the holder to the container, along the line 6-6 of Figure 7;

Figure 7 is a perspective view of one embodiment from the interior of the container and showing the bracket;

Figure 8 is a perspective of another embodiment from the interior of the container with the holder removed; and

Figure 9 shows a plan view of the tops of the two halves of the container.

### DESCRIPTION OF THE PREFERRED EMBODIMENTS

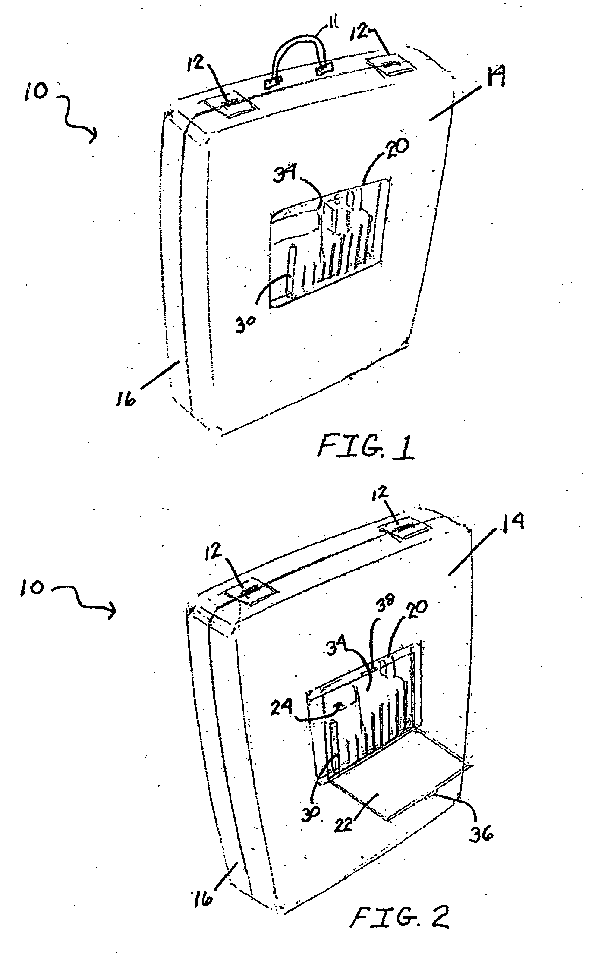

Figures 1 and 2 show one embodiment of the container and accessory holder of the present invention. In this embodiment the container 10 is a tool case with an accessory holder 20 containing drill bits 30. The tool case 10 includes a top portion 14 and a bottom portion 16 pivotally connected by hinges (not shown). The top portion 14 and bottom portion 16 are clamshell-shaped. A handle 11 may also be included on the tool case 10. Although the container of this embodiment is a tool case having a generally rectangular shape and two clamshell halves, any type and style of tool case or other container may be used. Figures 1 and 2 show the use of clasps 12 to connect the two halves, but any type of fastening mechanism may be used to connect them.

The accessory holder 20 has a door 22 with a latch 36, which fits into a recess 38. Alternatively, other means such as clasps, clips, hooks, tabs, buttons, snaps or the like may be used to secure the door 22 in a closed position. The door may be removable from the rest of the holder or may be connected to the rest of the holder by a hinge, for example, so that it moves between a closed position and an open position with respect to the storage space 24. If desired, all the walls of the accessory holder may be devoid of an access opening such as a door. Such a situation may be desirable for permanent display models, for example.

In the embodiment of the invention shown in Figures 1 and 2, the accessory holder 20 is contained within the top portion 14 of the tool case 10 and is located in the approximate center, but can be located at different positions. Alternatively, the accessory holder may be located on the base portion of the container or on any of the sides of the top portion or base portion of the container and in any orientation. Moreover, although the accessory holder 20 in this embodiment is flush with the exterior surface of the tool case 10, it may extend beyond the inner surface of the tool case 10 to provide additional storage space for accessories. Alternative embodiments may also contain more than one accessory box in a single container.

The accessory holder 20 in this embodiment is made of a transparent plastic material and is preferable. Alternatively, the holder 20 may be constructed of any other suitable material that is transparent. When a transparent material is used, the holder 20 acts as a window 34 to the items within the main tool storage compartment, as well as to the drill bits 30 within the accessory holder 20. This feature is of value to manufacturers of different varieties of kits desiring to display the contents of the kit to potential purchasers. It is also acceptable to make the holder with only one side being transparent, but that is not preferred.

The accessory holder of the present invention may be adapted to receive a variety of different items. For example, drill bits, nails, screws, sockets, sewing needles, fishing lures, writing instruments, and the like may all be stored inside an accessory holder adapted for such items. The accessory holder may be adapted for storing such items by, for example, providing recesses corresponding to the shapes of the items to be stored or providing shelves or bins that may be used to store different types of items. Alternatively, the accessory holder may contain a single storage area suitable for larger or irregularly-shaped items. The embodiment of the invention illustrated in Figures 1 and 2 includes an accessory holder 20 adapted for holding drill bits 30.

Because the accessory holder 20 is reversible, it may be inserted into the container 10 in a first position with the holder door 22 facing the interior of the container 10 and the back wall of the holder facing the exterior of the container 10 as shown in Figure 1, or in a second position with the holder door 22 facing the exterior of the container 10 and the back wall of the holder facing the interior of the container 10 as shown in Figure 2.

When the accessory holder is in the first position so that the door 22 faces the interior of the container 10 and the back wall of the holder 20 faces the exterior of the container, the storage space 24 within the holder 20 may be accessed when the container 10 is opened, but not when it is closed. This feature is valuable to kit manufacturers desiring to display the contents of their kit to potential purchasers in a retail facility without the apprehension that the displayed portions of the kit will be removed and stolen.

When the accessory holder is in the second position so that the door 22 faces the exterior of the container 10 and the back wall of the holder 20 faces the interior of the container, the storage space 24 within the holder 20 may be accessed when the container 10 is closed. This external access is convenient to a user who desires frequent access to the accessories within the holder but does not want to open the entire container each time an accessory is needed. Moreover, the ability to access the accessories from the exterior of the container increases project efficiency and prevents the user from having to keep the container open for the duration of a task and risk spillage of its contents.

Figure 7 shows the inside of the portion (14 or 16 depending on whether it is the top portion or base portion) of the container 10 that is configured to receive the accessory holder 20. An aperture 50 is formed in the portion. Surrounding the aperture is a bracket 52. The bracket 52 shown in Figure 7 has three sides, but may have four or two sides. The vertical side members 42 of the bracket 52 are mirror images of each other and can be slots or rails. As an alternative, the bracket 52 may be oriented so that side members 42 are horizontally oriented. Such an orientation would be used when an accessory holder 20 is inserted into the bracket 52 horizontally as opposed to vertically. The bottom side 46 of the bracket 52 is configured to receive the top or bottom side of the accessory holder 20 since the accessory holder is reversible. Preferably, the bottom side 46 of the bracket 46 is configured as a channel or a lip.

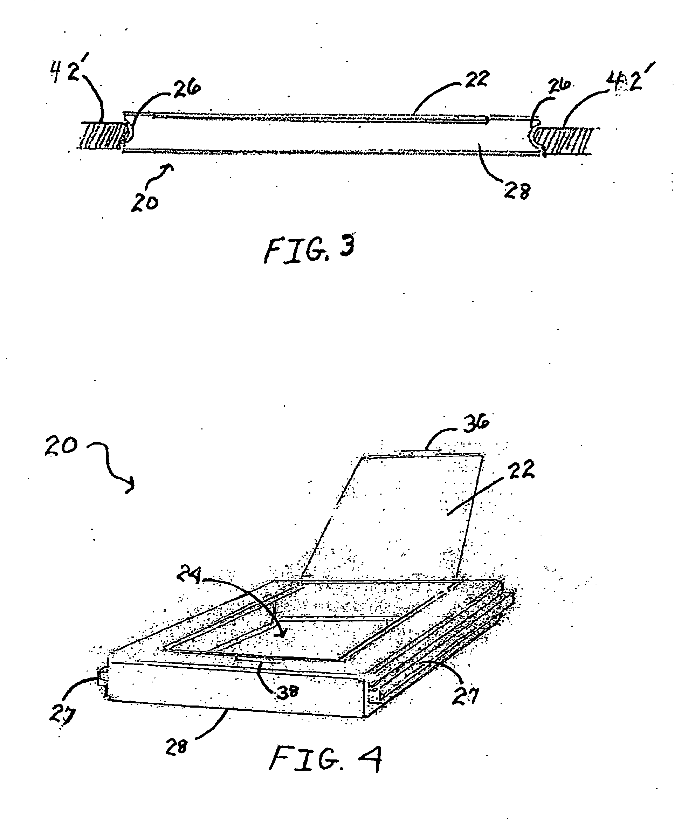

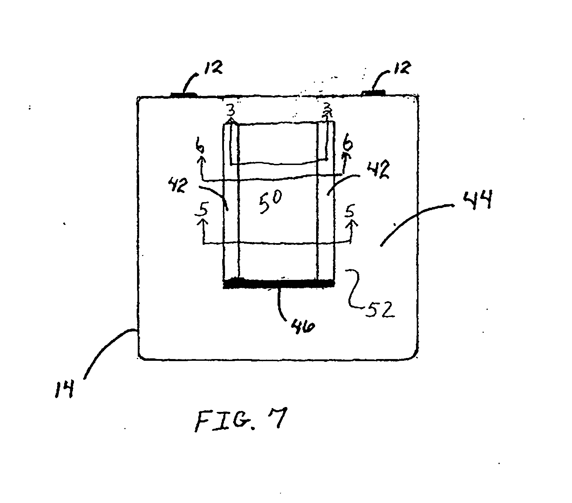

Figures 3 and 4 show two different configurations for the accessory holder 20. Figure 3 shows one embodiment of a reversible accessory holder contained within a case, taken along line 3-3 of Figure 7. This figure shows the accessory holder having slots 26 on each of its vertical sides. As an alternative, if the holder 20 is inserted horizontally, the slots 26 would be on the horizontal sides of the holder 20. The slots 26 engage with rails 42' that make up the bracket side members 42 in Figure 7 discussed above. In operation, the slots 26 of the accessory holder 20 are lined up with the rails 42' and the accessory holder is slid into engagement with the two rails 42' adjacent to the vertical sides of an aperture 50 in the interior wall of the container 10. Figure 6 illustrates the relative position of the holder 20 in the container 10. Specifically, Figure 6 shows the general rail and slot arrangement in Figure 3, where the bracket side members 42' contain rails 32 and are located adjacent the vertical sides of the aperture 50 in the interior wall 44 of portion 14, and the slots 26 are located on the reversible accessory holder 20 having door 22 and back wall 28. In Figure 6, the accessory holder 20 has rounded slots 26. Alternatively, the slots could be rectangular, square, triangle or any other suitable shape. As can be seen, the bracket side members 42' preferably are spaced from the edge 52 of the aperture 50 by a distance "D" so they are adjacent to the aperture 50. This construction provides support for the accessory holder 20 from the container portion 14. However, such placement is not necessary. The dashed lines show the relative position and where the edges 52 support a portion of the accessory holder 20.

Figure 4 shows an alternate embodiment of the accessory holder 20 where the slots 26 from Figure 3 are replaced with rails 27. Figure 4 shows a door 22 having a latch 36 that may be received into recess 38. Opposite the door 22 is a back wall 28, which does not contain an access door. The storage space 24 is located between the door 22 and the back wall 28. In this embodiment, the storage space 24 is smaller than the back wall 28. Alternatively, the dimensions of the door 22 and storage space 24 may be enlarged to match the length and width of the back wall 28, thereby increasing the ability of the storage area to accommodate more items.

In Figure 4, the door 22 is shown in an open position, exposing the storage area 24. Depending on whether the accessory holder 20 is inserted into the container in the first or second position, the door 22 may face the inside of the container or the outside of the container.

The storage area 24 in this embodiment is not adapted for any particular item. Items of any shape may be placed within the storage area 24, so long as the dimensions of the item fit within the dimensions of the storage area 24. Alternatively, the storage area 24 may be specifically adapted for various items. For example, the storage area 24 may contain recesses or sub-regions adapted to receive items such as drill bits, sockets, nails, screws, needles, thimbles, lures, pencils, business cards, or any other item that fits within the dimensions of the storage area 24.

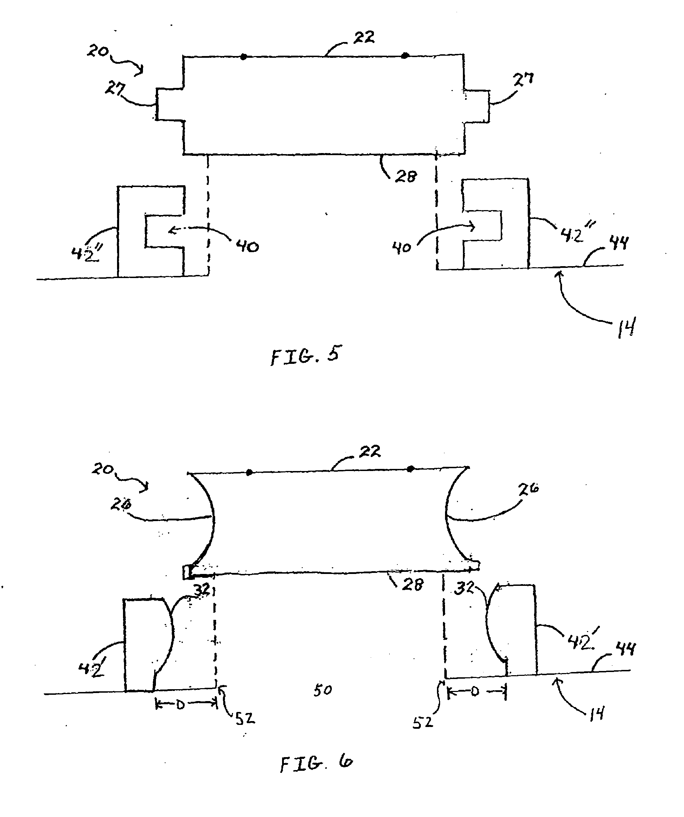

In the embodiment of an accessory holder 20 shown in Figure 4, the two sides of the holder 20 that are perpendicular to the axis of rotation of the door 22 are equipped with rails 27. As explained above, the bracket side members 42" can be oriented either vertically or horizontally. These rails 27 may be designed to fit into slots formed within a container, such as the slots 40 formed in the bracket side members 42" as shown in Figure 5. However, the two sides of the holder 20 and the door 22 may also be aligned so that they are all parallel. Figure 5 shows the accessory holder 20 removed from the container 10 in the same manner as described with respect to Figure 6. Figure 5 shows the bracket side members 42" configured to receive the rails 27. Slots 40 are contained within bracket side members 42. The bracket side members 42" are placed on the interior wall 44 of portion 14 of the container 10 surrounding the aperture 50. As can be seen, rails 27 of the holder 20 are rectangular and the side brackets or bracket side members 42" are channels. The rails 27 and side brackets 42" can be other shapes included rounded, triangular or other suitable shapes. The operation of the accessory holder 20 shown in Figures 4 and 5 is similar to the operation described for Figures 3 and 6. In Figure 5, the slot 40 and rail 27 arrangement allows for the accessory holder 20 to be slidably inserted into the bracket 52 located in the case or container 10.

The slot and rail arrangement prevents removal of the accessory holder through the aperture in the case. This arrangement allows movement in a lateral direction, but prohibits movement in a vertical direction. Therefore, when the holder door 22 is facing the interior of the case, a situation that would be common in a retail facility, the holder can be neither opened from the outside of the case nor removed from the case. When the holder door 22 is facing the exterior of the case, the inability to remove the holder 20 from the case may be beneficial because it eliminates the possibility that the holder 20 will be inadvertently removed, leaving an aperture in the case through which other items may be lost when the case is shifted.

Figure 7 shows one embodiment of a lip used to support a reversible accessory holder. Lip 46 is the bottom portion of the bracket 52 into which the reversible accessory holder 20 is slidably received. The lip 46 is located on the interior wall 44 of portion 14 of the container and at the bottom of the bracket 52, parallel to the hinges (no shown) and perpendicular to the side members 42 of the bracket 52.

An alternative to mounting the bracket on the interior or exterior of the container surrounding the aperture 50 is to form the bracket 52 within the horizontal and vertical sides of the aperture 50 in the container and include an opening 60 at the top of the portion 70. Figure 8 discloses such an embodiment. In this embodiment, the aperture 50 and opening 60 may also be considered a passageway. The passageway can be constructed in either a horizontal or a vertical orientation in the same manner as explained with reference to the bracket embodiments. The side members 42 and bottom side 46 of the bracket 52 are formed in the portion 14 of the container surrounding the aperture 50. The same system of slots and rails as previously described may be used here as well.

The accessory holder used in this embodiment may extend the entire length of the aperture 50 and complete the top part of the portion 70. It is preferable to include a mechanism for fastening the accessory holder in place. For example, where the accessory holder 20extends to the top of the container 20, the clasps 12 could be used to overlap the accessory holder 20 and the two halves of the container 10.

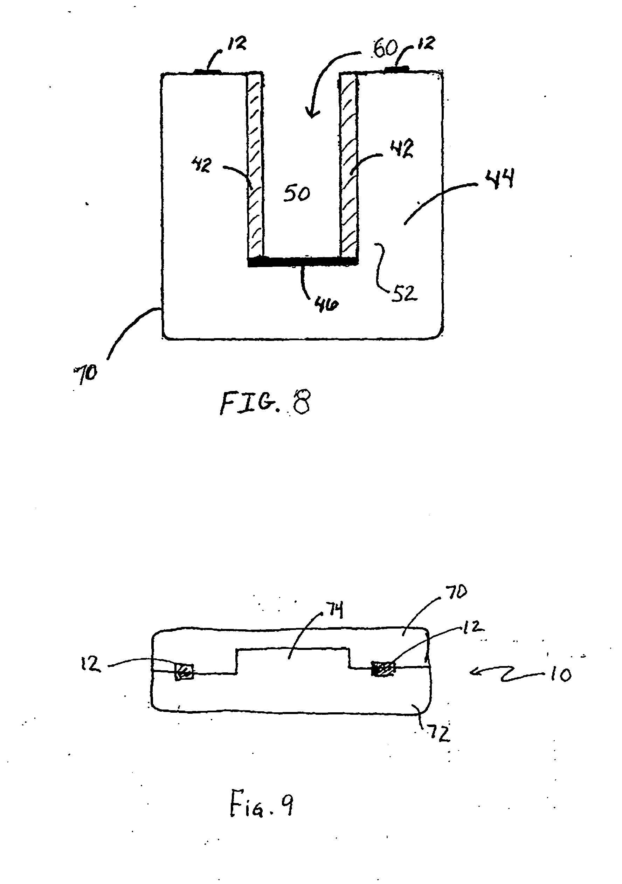

In an alternative construction, the accessory holder 20 may extend to near the top of the container portion 70 and the other portion of the container 72 would be configured to overlap the accessory holder 20 thereby securing the holder 20. The overlapping relationship can be achieved many ways including the construction shown in Figure 9. Specifically, Figure 9 shows a plan view of the tops of the two halves 70, 72 of the container 10. Container portion 70 includes the bracket 52. It is located in the area below the extension 74 of container portion 72. When the container 10 is closed, the extended portion 74 of container portion 72 covers the accessory holder 20 (not shown) that is located in the aperture 50 of container portion 70. When the hinges 12 are fastened, the accessory holder 20 is held securely in place.

Another aspect of the invention is directed to a method of deterring the theft of items displayed in a container, while allowing access to the items from the outside of the container after purchase. The method includes: (1) providing a container with an aperture adapted to slidably receive a transparent holder, (2) inserting a holder into the aperture with the holder door facing the interior of the container to prevent theft, (3) removing the holder from the aperture after purchase of the container, and (4) inserting the holder into the aperture with the door facing the exterior of the container to allow access to the items in the holder from the exterior of the container.

If the accessory holder is equipped with rails and the sides of the aperture in the container are equipped with slots, or vice versa, the method of the invention may include inserting the holder into the aperture by sliding the rails into the slots. Other types of mechanisms may alternatively be used to insert the accessory holder into the container. The method may also include opening the door of the accessory holder to access the items inside the holder while the container is in a closed position.

It is intended that the foregoing detailed description be regarded as illustrative rather than limiting, and that it be understood that it is the following claims, including all equivalents, that are intended to define the spirit and scope of this invention.

## Claims

1. A container having an interior and an exterior, the container comprising:
a top portion pivotally connected to a base portion; and
a holder removably mounted to one of said top portion or said base portion on the interior of said container, said holder having a storage area which is accessible from said interior of the container when the holder is inserted in a first position and accessible from said exterior of the container when said holder is inserted in a second position.

2. The container of claim 1 wherein said container comprises a toolbox.

3. The container of claim 2 wherein said holder is adapted to receive accessories.

4. The container of claim 1 wherein said container includes a passageway.

5. The container of claim 1 further comprising a bracket, said bracket being adjacent to at least two sides of an aperture located in said one of said top portion or said base portion.

6. The container of claim 5 wherein the holder further comprises rails adapted to engage slots in said bracket.

7. The container of claim 5 wherein said bracket comprises two side bracket members and a bottom portion.

8. The container of claim 1 further comprising a bracket formed in a passageway of one of said top portion or said base portion.

9. The container of claim 8 wherein said bracket further comprises slots adapted to engage rails on said holder.

10. The container of claim 8 wherein the other of said top portion and aid base portion further comprises an extended portion.

11. The container of claim 5 wherein said bracket further comprises slots adapted to engage rails on said holder.

12. A container comprising:
a top portion pivotally connected to a base portion; and
a holder slidably and reversibly mounted in a bracket located adjacent to an aperture in one of said top portion or said base portion, wherein said holder comprises a door pivotally connected to a bottom portion of said holder and wherein said holder is adapted to receive accessories, said accessories being accessible from the interior of the toolbox when said holder is inserted in a first position and accessible from the exterior of the toolbox when said holder is inserted in a second position.

13. The container of claim 12 wherein said holder is made from a transparent material.

14. The container of claim 12 wherein said bracket comprises at least two side members and a bottom portion.

15. A method of deterring theft of items displayed in a container while allowing access to the items from the outside of the container after purchase, the method comprising:
providing a container having an interior and an exterior, said container comprising a top portion pivotally connected to a base portion, wherein one of said top portion or said base portion comprises a bracket that slidably receives a transparent holder, said holder having a door and a bottom portion having four sides;
inserting said holder into said brackets with said door facing said interior of the container to prevent theft;
removing said holder from said aperture after purchase of said container; and
inserting said holder into said aperture with the door facing said exterior of said container to allow access to the items in said holder when said container is closed.

16. The method of claim 15 wherein said holder further comprises rails adapted to engage slots in said bracket.

17. The method of claim 16 wherein said holder is inserted and removed by sliding said rails along said slots.

18. The method of claim 15 further comprising opening the door to access the items in said holder while the container is in a closed position.
